Europäisches Patentamt

European Patent Office

Office européen des brevets

(11) Publication number : **0 571 213 A1**

# (12) EUROPEAN PATENT APPLICATION

(21) Application number : 93303940.6

(22) Date of filing : 20.05.93

(51) Int. Cl.⁵ : **G06F 12/06**

(30) Priority : **20.05.92 GB 9210767**

(43) Date of publication of application :
**24.11.93 Bulletin 93/47**

(84) Designated Contracting States :
**BE DE DK ES FR GB IT LU NL SE**

(71) Applicant : **CODEMASTERS LIMITED**
**90 Fetter Lane**
**London EC4A 1JP (GB)**

(72) Inventor : **Darling, Richard**
**Moreton House Cottage**
**Moreton Morell Warwickshire CV35 9AR (GB)**
Inventor : **Carron, Edward Andrew**
**5 The Cedars 42 Warwick Place**
**Leamington Spa CV32 5DE (GB)**

(74) Representative : **Bibby, William Mark et al**
**Mathisen, Macara & co. The Coach House 6-8**
**Swakeleys Road**
**Ickenham Uxbridge UB10 8BZ (GB)**

(54) **Interfacing device for a computer game system.**

(57)    An interfacing device for connecting the processing unit of a computer game system to an external data storage medium, has an address comparison unit (21) for comparing addresses from the processing unit with a reference address $A_{ref}$ and causes replacement data $D_{rep}$ to be substituted for data in the addressed storage location of the external data storage medium whenever the compared addresses are the same. Control circuitry is used to monitor addresses from the processing unit to detect for self-checking activity and inhibits the substitution of data if self-checking activity is detected.

Data from the external data storage medium may be compared with reference data, and data replacement may be inhibited during a current read access cycle in response to data comparison carried out selectively during the current read access cycle or during a read access cycle earlier than the current read access cycle.

Fig.2.

EP 0 571 213 A1

EP 0 571 213 A1

This invention relates to computer game systems and it relates particularly to an interfacing device suitable for modifying the manner in which a computer game is played.

In many known computer game systems the characteristics of a game, particularly its degree of difficulty, are to a large extent predetermined by the data stored in the external data storage medium, such as a game cartridge.

European Patent Specification, Publication No. 402,067, describes an interfacing device for detachably interconnecting the processing unit of a computer game console to an external data storage medium and which is capable of operating in various ways, user-selected or preset, to modify the rules of the game and thereby enhance the playability of the game.

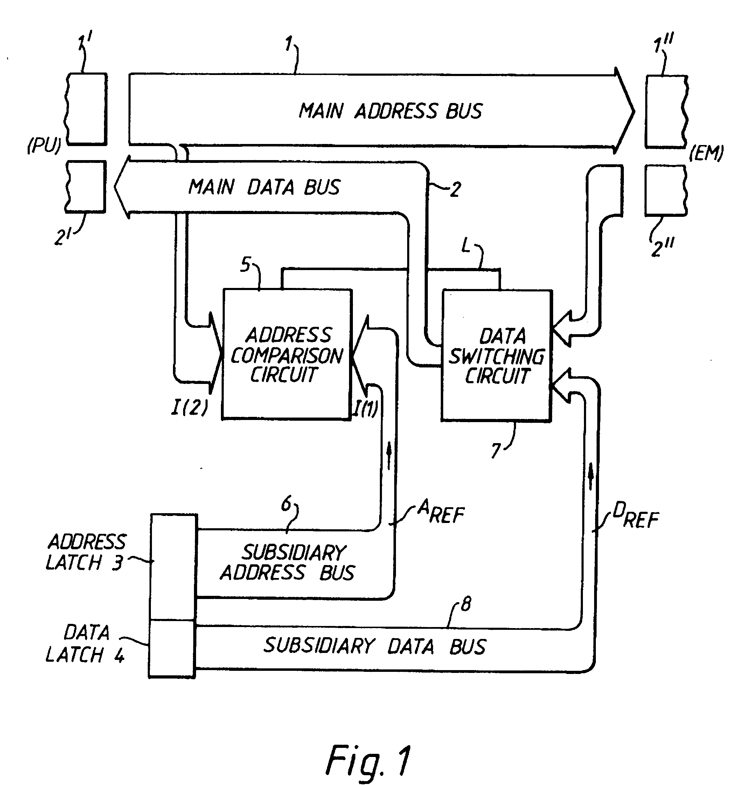

Figure 1 of the accompanying drawings, shows one embodiment of the interfacing device described in the aforementioned patent specification.

Referring to Figure 1, the interfacing device has a main address bus 1 for interconnecting the address bus 1' of the processing unit (PU) and the address bus 1" of the external memory (EM), enabling addresses to pass from the processing unit (PU) to the external memory (EM).

Similarly, a main data bus 2 interconnects the data bus 2' of the processing unit (PU) and the data bus 2" of the external memory (EM), enabling data to pass from the external memory (EM) to the processing unit (PU) in response to addresses received over the address bus 1.

The interfacing device has an address latch 3 and a data latch 4 which store a reference address $A_{ref}$ and replacement data $D_{rep}$ respectively. The stored reference address $A_{ref}$ is routed to a first input I(1) of an address comparison circuit 5 via a subsidiary address bus 6 and the stored replacement data $D_{rep}$ is routed to an input of a data switching circuit 7 via a subsidiary data bus 8.

As Figure 1 shows, addresses on the main address bus 1 (which are generated in the processing unit (PU) of the computer games console) are routed to a second input I(2) of the address comparison circuit 5 wherein they are compared with the reference address $A_{ref}$ received at input I(1).

If the compared addresses are different, data stored in the addressed storage location of the external memory (EM) is routed via the data switching circuit 7 onto the main data bus 2 for onward transmission to the processing unit.

Conversely, if the compared addresses are the same, the address comparison circuit 5 outputs an actuation pulse onto line L causing the data switching device 7 to change its switching state, in order to block transmission of the data from the external memory and route the replacement data $D_{rep}$ onto the main data bus 2 for onward transmission to the processing unit (PU). By this means, the replacement data $D_{rep}$ is substituted for the data stored in the addressed storage location of the external memory, upon recognition of the reference address $A_{ref}$.

As described in the aforementioned patent specification, the reference address $A_{ref}$ and the replacement data $D_{rep}$ need not necessarily be prestored in latches 3 and 4. Alternatively, the reference address and replacement data could be selected by the user.

In some computer game systems, the processing unit may execute checksum and memory checking routines.

In such cases, it is desirable that an interfacing device such as that described should not respond to addresses that are routed onto the main address bus solely as a consequence of such self-checking activity.

It is one object of the present invention to provide an interfacing device having the capability to inhibit data replacement should self-checking activity be detected.

According to one aspect of the invention, there is provided an interfacing device for connecting the processing unit of a computer game system to an external data storage medium to enable the processing unit to address and receive data from different storage locations in the external data storage medium, the interfacing device comprising means for comparing a reference address and addresses from the processing unit, means for modifying data processed by the processing unit in dependence on the comparison, and control means for monitoring addresses from the processing unit to detect for self-checking activity and for inhibiting the modifying means if self-checking activity is detected.

In a preferred embodiment, the control means determines whether addresses from the processing unit lie inside or outside an address block which is of predetermined size and contains the reference address, and utilises the results of the determinations to detect for self-checking activity.

In general, each address in the address block may consist of N bits and the address block consists of $2^{N-n}$ addresses, where $N > n$, and each address has the same combination of N-n high value bits and a different respective combination of n low value bits.

The determinations made by the control means may be utilised in accordance with different criteria to detect for self-checking activity.

In one embodiment, the control means inhibits the modifying means provided m consecutive addresses

2

from the processing unit are determined to lie outside the address block, and the modifying means is released from the inhibition of inhibiting means provided p consecutive addresses from the processing unit are determined to lie inside the address block and to have values less than that of the reference address.

In this case, the sustained address activity outside the address block is deemed to be an indication that self-checking is in progress.

In another embodiment of the invention, the control means inhibits the modifying means provided that a succession of R addresses from the processing unit is determined to lie inside the address block and successive ones of the R addresses are separated by no more than N addresses from the processing unit outside the address block, where N is a preset integer and said succession of R addresses is the succession of addresses lying below the reference address or the succession of addresses lying above the reference address.

According to another aspect of the invention, there is provided an interfacing device for connecting the processing unit of a computer game system to an external data storage medium, to enable the processing unit to address, and receive data from different storage locations in the external data storage medium, the interfacing device comprising means for comparing a reference address with addresses from the processing unit, means for comparing data from the external data storage medium with reference data, means for modifying data processed by the processing unit in dependence on said comparison of the reference address and the addresses from the processing unit, and means for inhibiting the modifying means during a current read access cycle of the processing unit in response to a said comparison of data carried out selectively during the current read access cycle or during a read access cycle earlier than the current read access cycle.

The means for inhibiting the modifying means may comprise a serial arrangement of latches for temporarily storing the results of the comparisons of data carried out during successively earlier read access cycles, and means for utilising a selected said result to inhibit the modifying means.

According to a further aspect of the invention, there is provided an electrical circuit for detecting for self-checking activity on the address bus of a processor, comprising means for determining whether addresses on the address bus lie inside or outside an address block containing a predetermined reference address, and for utilising the result of the determinations to detect for self-checking activity.

Embodiments of the invention will now be described, by way of example only, with reference to the accompanying drawings, in which:

Figure 1 is a block schematic diagram showing an interfacing device as disclosed in European patent specification, publication No. 402,062;

Figure 2 shows an electrical circuit forming part of an interfacing device according to the present invention; and

Figure 3 illustrates in detail a component of the electrical circuit shown in Figure 2.

In the described embodiment, the reference address $A_{ref}$ comprises a 23 bit word, consisting of eight low value bits (1-8) and fifteen high value bits (9-23).

The reference address $A_{ref}$ occupies an address block consisting of 256 (i.e. $2^8$) different address words. The address words forming the address block all have the same combination of high value bits (9-23), which combination is unique to all addresses inside the address block, and each address word has a different respective combination of low value bits (1-8). Accordingly, the 256 address words have consecutive values spanning the address range of the address block.

As already explained, addresses routed onto the main address bus by the processing unit of a computer game console are compared with the reference address $A_{ref}$.

An address received by the interfacing device from the processing unit will lie inside the address block if the high value bits (9-23) of the compared addresses are the same, and the received address will lie outside the address block if the high value bits (9-23) of the compared addresses are different.

If self-checking routines, such as check sum and memory checking procedures are in progress this may result in increased activity on the main address bus of addresses lying outside the address block containing the reference address $A_{ref}$.

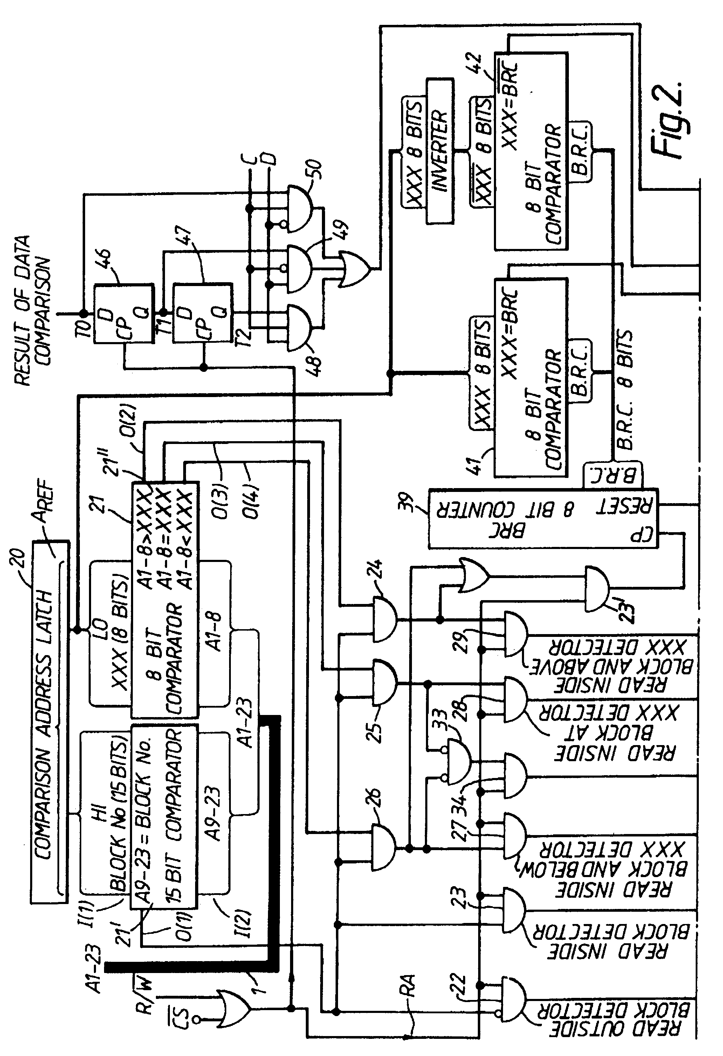

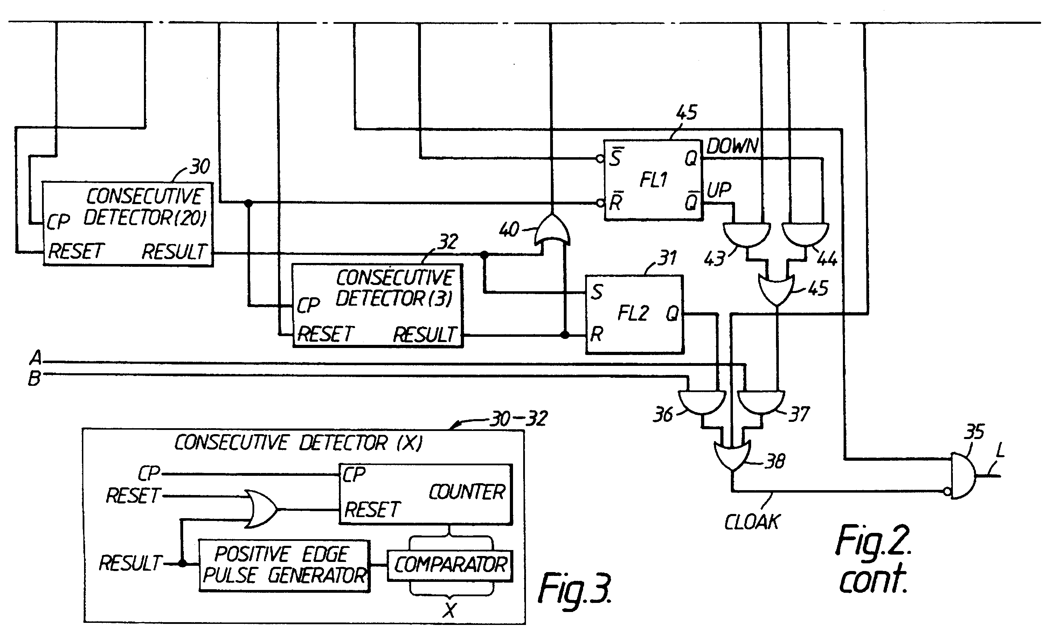

As will be explained, control circuitry, shown in Figure 2 of the drawings, determines whether each successive address received over the main address bus 1 lies inside or outside the address block containing the reference address $A_{ref}$, and is operative to utilise the resulting determinations to evaluate the relative levels of address activity inside and outside the address block, whereby to determine whether or not self-checking routines are in progress.

If it is determined that self-checking routines are in progress, the control circuitry generates a cloaking signal which has the effect of inhibiting the associated data switching circuit (not shown in Figure 2) of the interfacing device, preventing data replacement from taking place. More specifically, the cloaking signal prevents the aforementioned actuation pulses from being routed to the data switching circuit over line L.

The control circuitry shown in Figure 2 will now be described in more detail and, in what follows, the convention is adopted that a true condition is high and a false condition is low.

Referring to Figure 2, an address latch 20 stores the reference address $A_{ref}$ which, as already explained, comprises a 23 bit word, consisting of eight low value bits (1-8) and 15 high value bits (9-23).

The reference address $A_{ref}$ is supplied to a first input I(1) of an address comparison circuit 21, whereas a second input I(2) of the address comparison circuit 21 is supplied with addresses (each consisting of a 23 bit word) which are routed over the main address bus 1 from the processing unit of the computer game console to which the interfacing device is connected.

As shown in Figure 2, the address comparison circuit 21 is comprised of two parts; a first part 21' which compares the high value bits (9-23) of the received addresses, and a second part 21" which compares the low value bits (1-8) of the received addresses.

The first part 21' of the address comparison circuit 21 has a single output O(1) connected to respective inputs of a "read outside block detector" and a "read inside block detector" in the form of inverted-input AND gate 22 and AND gate 23 respectively. The other input terminals of gates 22 and 23 are connected to receive read access pulses from the processing unit transmitted over a read access line, referenced RA.

If the first part 21' of address comparison circuit 21 determines that the high value bits of the compared addresses are the same (indicating that the current address received from the processing unit lies inside the address block) this will cause output 0(1) to go high which, in turn, causes the output of the "read inside block detector" (i.e. AND gate 23) to go high. Conversely, if the first part 21' of the address comparison circuit 21 determines that the high value bits of the compared addresses are different (indicating that the current address received from the processing unit lies outside the address block) this will cause output 0(1) to go low which, in turn, causes the output of the "read outside block detector" (AND gate 22) to go high.

The output O(1) of the first part 21' of the address comparison circuit 21 is also connected to the inputs of three further AND gates 24,25,26, and each such further AND gate is also connected to a respective output 0(2), O(3) and O(4) of the second part 21" of the address comparison circuit 21. The output of each gate 24,25,26 is connected to a respective further AND gate 29,28,27, these further AND gates 29,28,27 also being connected to the read access line RA.

The second part 21" of the address comparison circuit 21 compares the low value bits (1-8) of the reference address $A_{ref}$ (which has a value XXX, say) with the low value bits of the current address (which has a value YYY, say) transmitted over the main address bus 1, and the respective outputs 0(2), 0(3) and 0(4) will go high if the value YYY is determined to be greater than, equal to and less than the value XXX.

With the described configuration of gates, the outputs of AND gates 29, 28 and 27 will be high provided that the current address transmitted over the address bus 1 lies inside the aforementioned address block and that the low value bits (1-8) of that address have a value (YYY) which is respectively greater than, equal to and less than the value (XXX) of the reference address $A_{ref}$.

The output of AND gate 22 (which goes high whenever the current address is determined to lie outside the address block) is connected to the clock pulse terminal (CP) of a first consecutive detector circuit 30 and the output of AND gate 23 (which is high whenever the current address is determined to lie inside the address block) is connected to the reset terminal of circuit 30. The first consecutive detector circuit 30 is shown in greater detail in Figure 3.

As will be clear from Figure 3, circuit 30 is effective to count the number of consecutive addresses which lie outside the address block and will output a negative-going pulse to the set input (S) of a first flip-flop circuit 31 whenever this count reaches a first preset threshold value (which is 20 in this embodiment).

Similarly, the clock pulse terminal (CP) of a second consecutive detector circuit 32 is connected to the output of AND gate 27 which goes high whenever the current address is determined to lie inside the address block and as having a value (YYY) less than the value (XXX) of the reference address. Two further gates 33,34 ensure that the second consecutive detector circuit 32 will be reset if the current address is determined to have a value equal to or greater than the value (XXX) or outside the address block. Accordingly, the second consecutive detector circuit 32 is effective to count consecutive output pulses from gate 27 and will reset the first flip-flop circuit 31 whenever this count reaches a second preset threshold (which is three in this embodiment).

As already explained, the output of AND gate 28 will go high whenever the current address is detected as being exactly the same as the reference address $A_{ref}$. In such circumstances, the data switching circuit of the interfacing device is required to be activated to effect data replacement, provided the processing unit of the computer games console is operating normally; that is to say, provided self-checking routines are not being carried out. To that end, the output of AND gate 28 is connected to one input terminal of an inverted-input AND gate 35. Provided the inverted input of gate 35 is low the required actuation pulse will be output onto line L, whereby to trigger data replacement at the start of the next read access cycle.

However, if, as will now be explained, it is determined that self-checking routines are being carried out, a cloaking signal CLOAK will be generated which causes the inverted input of the gate 35 to go high thereby inhibiting the output of actuation pulses onto line L, and preventing data replacement from taking place.

Different criteria may be applied to gauge whether or not self-checking routines are being carried out, and the cloaking signal needs to be generated.

In the described embodiment of the invention two different criteria (which may be applied separately or in combination) are adopted, and these criteria can be selected by appropriately setting the values of two control bits (A and B) applied to respective input terminals of two further AND gates 36,37.

The outputs of AND gates 36,37 are connected to the inverted input of gate 35 via OR gate 38.

If control bit B is set high, the cloaking signal will be generated at the output of gate 38 whenever the output of the first flip-flop circuit 31 is high, and, as already explained, this will occur whenever the output of the first consecutive detector circuit 30 goes high as a consequence of detecting twenty consecutive addresses lying outside the address block. Conversely, the cloaking signal will be removed whenever the output of the first flip-flop circuit 31 is low, and this will happen if the second consecutive detector circuit 32 subsequently detects three consecutive addresses which lie inside the address block and have values below that of the reference address $A_{ref}$.

With this scheme, selected by setting control bit B high, the cloaking signal will be generated (thereby preventing data replacement from taking place) if-sustained activity on the main address bus of addresses lying outside the address block is detected. This condition is gauged by detecting twenty consecutive addresses outside the address block, and normal address activity is deemed to have resumed upon detection of three consecutive addresses which lie inside the address block and have values below that of the reference address $A_{ref}$.

In this way, data replacement should only ever be effected if the program counter of the processing unit flows over the address code immediately preceding the reference address and is turned off by sustained read activity outside the address block.

If control bit A is set high, different criteria are used to gauge whether or not self-checking routines are in progress and the cloaking signal needs to be generated.

In this scheme, the output of a yet further AND gate 23' (which is high whenever the current address lies inside the address block but does not equal the reference address) is connected to the clock pulse input (CP) of a counting circuit 39. The reset input of counting circuit 39 is connected to the output of OR gate 40 whose respective inputs are connected to the outputs of the first and second consecutive detector circuits 30,32. With this arrangement, the counting circuit will be reset if the output of either consecutive detector circuit 30,32 goes high. Accordingly, if the counting circuit is not reset, allowing the count to continue, this demonstrates that the number of consecutive accesses outside the address block is fewer than a first preset number (20 in this example - i.e. the criterion set by circuit 30) and that the number of consecutive accesses within the address block is less than a second present number (3 in this example - the criterion set by circuit 32).

Respective comparison circuits 41,42 compare the count in counting circuit 39 with the value XXX of the eight low value bits of the reference address $A_{ref}$ and with the value $\overline{XXX}$ of the complement of the eight low value bits. If the count reaches either value, one input of a respective AND gate 43,44 will go high. The other inputs of AND gates 43,44 are connected to respective outputs of a second flip-flop circuit 45, whose respective set and reset input terminals are connected to the outputs of AND gates 28 and 29. The outputs of AND gates 43,44 are connected to the inputs of OR gate 45 whose output is connected to one input of AND gate 37, the other input of gate 37 being connected to receive the control bit A. With this arrangement, the cloaking signal will be generated at the output of OR gate 38 provided the count in circuit 39 reaches either of the aforementioned threshold counts (XXX or $\overline{XXX}$).

The value XXX of the eight low value bits of the reference address $A_{ref}$ represents the number of addresses in the address block lying below the reference address, whereas the value $\overline{XXX}$ of the complement of the eight low value bits represents the number of addresses in the address block lying above the reference address.

Accordingly, with this scheme, selected by setting control bit A high, if the value of the count in counting circuit 39 reaches either of the afore-mentioned values XXX or $\overline{XXX}$, this indicates that a check sum or memory checking routine is flowing over the reference address either from the bottom of the address block upwards (if the count in circuit 39 reaches XXX) or from the top of the address block downwards (if the value in circuit 39 reaches $\overline{XXX}$).

The function of the second flip-flop circuit 45 is to ensure that the associated input of the correct AND gate 43 or 44 is maintained high depending on whether the detected addresses lie respectively below or above the reference address.

The count in counting circuit 39 will approach the value XXX or the value $\overline{XXX}$ as successive accesses within the address block increment it. The afore-mentioned criteria are based on the proposition that whilst check sum and memory checking routines are in progress there are likely to be fewer than the first preset number (e.g. 20) of address accesses outside the address block for every access inside the address block and that there are likely to be fewer than the second preset number (e.g. 3) of consecutive address accesses inside the address block.

European patent specification, publication No. 402,067 also discloses a data comparison technique whereby data from the external memory is compared with latched reference data which is the same as the data (from the external memory) which is to be replaced by the replacement data $D_{rep}$. This additional comparison enables substitution of the correct data and prevents errors that could arise as a result of ambiguity in the process of comparing addresses.

However, a problem may arise if the timing is such that execution of the data comparison technique involves a delay which involves latching the data comparison result at an arbitary (unclocked) point in the processor's read access cycle, which adversely affects the desired operation of the system.

Furthermore, the data bus will contain data values derived from several access cycles prior to the current access cycle, and if these data values have been generated as a result of check sum or memory checking routines they will differ from the expected data values from the external memory.

With a view to alleviating these problems, the embodiment now described has the capability to generate a cloaking signal, whereby to inhibit the replacement of data, in response to a comparison of reference data and actual data present on the data bus carried out during a read access cycle which is earlier than the most recent cycle in which such comparison is carried out, and this procedure provides an additional or alternative means for detecting check sum and memory checking routines.

To that end, the embodiment shown in Figure 2 has a shift register comprising the serial arrangement of two latches 46,47 which are clocked by the read access pulses on line RA. The result $T_o$ of a comparison of data carried out during each successive read access cycle is input to the first latch 46 of the shift register and, as will be apparent from Figure 2, the effect of clocking the two latches is to temporarily store the results $T_o$, $T_1$ and $T_2$ of data comparisons carried out during successively earlier read access cycles and to route each result to one input of a respective AND gate 48,49,50.

The values of control bits C,D supplied to each AND gate 48,49,50 determine which of the three results $T_0,T_1,T_2$ will be supplied to OR gate 38 in accordance with the following table.

| C | D | Effect | |
|---|---|--------|---|
| 0 | 0 | No Cloaking Signal | |
| 1 | 0 | | ($T_0$ selected |
| 0 | 1 | Cloaking Signal if | ( ($T_1$ selected |
| 1 | 1 | | ( ($T_2$ selected |

By this means, data replacement can be rendered totally insensitive to the results of the data comparison (C=O, D=O) or can be inhibited in response to data comparisons carried out during a selected one of successively earlier read access cycles.

It will be understood that the two different techniques embodied in Figure 2 (i.e. detection of self-checking activity on the one hand and data comparison on the other) can either be used in combination (as is the case in Figure 2) or independently.

## Claims

1. An interfacing device for connecting the processing unit of a computer game system to an external data storage medium to enable the processing unit to address and receive data from different storage locations in the external data storage medium, the interfacing device comprising means for comparing a reference address and addresses from the processing unit, means for modifying data processed by the processing unit in dependence on the comparison, and control means for monitoring addresses from the processing unit to detect for self-checking activity and for inhibiting the modifying means if self-checking activity is detected.

2. An interfacing device as claimed in claim 1, wherein the control means is arranged to determine whether addresses from the processing unit lie inside or outside an address block which is of predetermined size and contains the reference address, and utilises the results of those determinations to detect for self-checking activity.

3. An interfacing device as claimed in claim 2, wherein each address in the address block consists of N bits, and the address block consists of $2^{N-n}$ addresses, where $N>n$ and each address has the same combination of N-n high value bits and a different respective combination of n low value bits.

4. An interfacing device as claimed in claim 2 or claim 3, wherein the control means inhibits the modifying means provided m consecutive addresses from the processing unit are determined to lie outside the address block, and the modifying means is released from the inhibition of the control means provided p consecutive addresses from the processing unit are determined to lie inside the address block and to have values less than that of the reference address, where p and m are integers.

5. An interfacing device as claimed in any one of claims 2 to 4, wherein the control means inhibits the modifying means provided that a succession of R addresses from the processing unit is determined to lie inside the address block and successive ones of the R addresses are separated by no more than N addresses from the processing unit outside the address block, where N is a preset integer and said succession of R addresses is the succession of addresses lying below the reference address or the succession of addresses lying above the reference address.

6. An interfacing device as claimed in any one of claims 1 to 5 and further including means for comparing data from the external data storage medium with reference data, means for inhibiting the modifying means during a current read access cycle of the processing unit in response to a said comparison of data carried out selectively during the current read access cycle or during a read access cycle earlier than the current read access cycle.

7. An interfacing device as claimed in claim 6, wherein the means for inhibiting the modifying means comprises a serial arrangement of latches for temporarily storing the results of the comparisons of data carried out during successively earlier read access cycles, and means for utilising a selected said result to inhibit the modifying means.

8. An interfacing device for connecting the processing unit of a computer game system to an external data storage medium, to enable the processing unit to address, and receive data from different storage locations in the external data storage medium, the interfacing device comprising means for comparing a reference address with addresses from the processing unit, means for comparing data from the external data storage medium with reference data, means for modifying data processed by the processing unit in dependence on said comparison of the reference address and the addresses from the processing unit, and means for inhibiting the modifying means during a current read access cycle of the processing unit in response to a said comparison of data carried out selectively during the current read access cycle or during a read access cycle earlier than the current read access cycle.

9. An interfacing device as claimed in claim 8, wherein the means for inhibiting the modifying means comprises a serial arrangement of latches for temporarily storing the results of the comparisons of data carried out during successively earlier read access cycles, and means for utilising a selected said result to inhibit the modifying means.

10. An electrical circuit for detecting for self-checking activity on the address bus of a processor, comprising means for determining whether addresses on the address bus lie inside or outside an address block containing a predetermined reference address, and for utilising the result of the determinations to detect for self-checking activity.

*Fig. 1*

Fig.2.

EP 0 571 213 A1

Fig.2.
cont.

Fig.3.

**European Patent Office**

## EUROPEAN SEARCH REPORT

Application Number

EP 93 30 3940

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | EP-A-0 402 067 (CODE MASTERS SOFTWARE CO.) <br> * abstract * <br> * page 3, line 48 - page 6, line 17 * <br> * figures 2,5 * | 1,8 | G06F12/06 |
| | ----- | | |
| | | | **TECHNICAL FIELDS SEARCHED (Int. Cl.5)** |
| | | | G06F |

The present search report has been drawn up for all claims

| Place of search | Date of completion of the search | Examiner |
|---|---|---|
| BERLIN | 02 SEPTEMBER 1993 | MASCHE C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

11